# EUROPÄISCHE PATENTANMELDUNG

(11) **EP 2 090 385 A2**
(43) Veröffentlichungstag der Anmeldung: **19.08.2009**
(21) Anmeldenummer: 09000932.5
(22) Anmeldetag: 23.01.2009
(51) Int. Cl.: B21D 41/02

(54) **Vorrichtung zum Aufweiten von Rohren**

(30) Priorität: 18.02.2008 DE 202008002266 U
(71) Anmelder: NOVOPRESS GMBH PRESSEN UND PRESSWERKZEUGE & Co. KG., 41460 Neuss (DE)
(72) Erfinder: Krämer, Stephan, 46049 Oberhausen (DE)
(74) Vertreter: Paul, Dieter-Alfred

(57) **Zusammenfassung**

Die Erfindung betrifft eine Vorrichtung (1) zum Aufweiten von Rohren mit einem Kegel (7), der um seine Längsachse (X) drehbar und axial verschiebbar gehalten ist und an seinem einen axialen Endbereich mit einem Stellelement (4) eines Pressgeräts (2) koppelbar ist und an seinem andern Endbereich eine mit einem Aufweitkopf (21) in Eingriff bringbare Kegelspitze (8) aufweist. Der Kegel (7) und der Aufweitkopf (21) sind durch Mitnahmemittel in der weise gekoppelt, dass der Aufweitkopf (21) bei einer Drehung des Kegels (7) mitgedreht wird. Die Mitnahmemittel umfassen einen in einer Ringnut (8a) des Kegels (7) gehaltenen O-Ring (28) und/oder einen an der Kegelspitze (8) oder dem Aufweitkopf (21) gehaltenen Magnet (29) und/oder eine an der Kegelspitze (8) oder dem Aufweitkopf (21) ausgebildete axiale Nut (31) und an dem anderen der beiden Bauteile (8, 21) ein mit der Nut (31) in Eingriff stehendes Mitnahmeelement (32).

## Beschreibung

Die vorliegende Erfindung betrifft eine Vorrichtung zum Aufweiten von Rohren mit einem Kegel, der in dem Gehäuse eines Pressgerätes oder in einem an dem Gehäuse des Pressgeräts fixierbaren Grundkörper um dessen Längsachse drehbar und axial verschiebbar gehalten ist, wobei der Kegel an seinem einen axialen Endbereich mit einem Stellelement des Pressgeräts koppelbar ist und an seinem andern Endbereich eine mit einem Aufweitkopf in Eingriff bringbare Kegelspitze aufweist, und mit Mitnahmemitteln, durch die der Kegel und der Aufweitkopf in der Weise gekoppelt sind, dass der Aufweitkopf bei einer Drehung des Kegels um die Längsachse mitgedreht wird.

Eine Vorrichtung zum Aufweiten von Rohren dieser Art ist beispielsweise aus der EP 16 74 241 A1 bekannt. Diese Vorrichtung besitzt einen in radialer Richtung aufspreizbaren Aufweitkopf, der in ein aufzuweitendes Rohr eingeschoben und dann durch die Betätigung eines Pressgeräts auseinandergedrückt wird. Damit es beim Aufweiten des Rohrs nicht zu Inhomogenitäten an der Rohrinnenseite kommt, wird in das aufzuweitende Rohr eine Glättungshülse eingeschoben, bevor der Aufweitkopf in das Rohr eingebracht wird. Die Glättungshülse soll eine inhomogene Kraftübertragung von den Segmenten auf die Rohrinnenseite kompensieren.

An dieser Lösung wird als nachteilig angesehen, dass mit der Glättungshülse ein zusätzliches Bauteil in das Rohr eingeführt werden muss, was einen zusätzlichen Arbeitsschritt bedeutet. Weiterhin findet aufgrund der Glättungshülse nur eine indirekte Kraftübertragung von dem Aufweitkopf auf das Rohr statt, was zu Fertigungsungenauigkeiten führen kann.

Eine weitere Vorrichtung zum Aufweiten von Rohren wird von der Firma Uponor vertrieben. Diese Vorrichtung besitzt einen Rotationsadapter mit einem Grundkörper, der an dem Gehäuse des Pressgeräts festgeschraubt wird und auf seiner gegenüberliegenden Seite einen Aufweitkopf trägt. Dieser besteht aus einzelnen Segmenten, die in radialer Richtung bewegbar sind. Die Segmente des Aufweitkopfes definieren eine zentrale kegelige Aufnahme, in welche die Spitze eines in dem Grundkörper axial verschiebbar und drehbar gehaltenen Presskegels eingreift. Bei einer Betätigung des Pressgeräts wird der Presskegel in den Aufweitkopf gedrückt, so dass dessen Segmente auseinandergedrückt werden.

Um Inhomogenitäten an der Innenseite des aufzuweitenden Rohres zu kompensieren, die dadurch entstehen, dass die Segmente des Aufweitkopfes während des Aufweitvorgangs in Umfangsrichtung beabstandet voneinander sind, wird bei der bekannten Vorrichtung der Aufweitkopf jeweils beim Zurückziehen des Kegels um ein vorgegebenes Maß gedreht. Hierdurch wird erreicht, dass sich die Kraftangriffspunkte der Segmente an der Rohrinnenseite bei jedem Pressschritt verlagern. Konkret ist der Kegel in dem Grundkörper des Adapters über einen Freilauf derart zwangsgeführt, dass er bei der Rückzugsbewegung um ein definiertes Maß gedreht wird. Des weiteren ist der Aufweitkopf mit der Kegelspitze über Mitnahmemittel derart gekoppelt, dass der Aufweitkopf bei einer Drehung des Kegels mitgedreht wird. Dazu ist in der Mantelfläche der Kegelspitze eine Aufnahme vorgesehen, in welcher ein Druckstück bewegbar gehalten und elastisch gegen die Innenseite des Aufweitkopfes gedrückt wird, so dass ein Reibschluss zwischen dem Druckstück und dem Aufweitkopf besteht, der eine Drehmomentübertragung ermöglicht.

Aufgabe der Erfindung ist es, eine Vorrichtung zum Aufweiten von Rohren der eingangs genannten Art zur Verfügung zu stellen, welche eine einfachere Drehmomentübertragung vom Kegel auf den Aufweitkopf ermöglicht.

Diese Aufgabe ist erfindungsgemäß dadurch gelöst, dass die Mitnahmemittel einen in einer Ringnut des Kegels gehaltenen O-Ring und/oder einen an der Kegelspitze oder dem Aufweitkopf gehaltenen Magnet und/oder eine an der Kegelspitze oder dem Aufweitkopf ausgebildete, sich in der Längsachsenrichtung erstreckende Nut und an dem anderen der beiden Bauteile ein mit der Nut in Eingriff stehendes, insbesondere stiftförmig ausgebildetes Mitnahmeelement umfassen.

Erfindungsgemäß ist gemäß einem Aspekt der Erfindung also als Mitnahmemittel ein in einer Ringnut der Kegelspitze gehaltener O-Ring vorgesehen. Dieser O-Ring drückt aufgrund seiner Eigenelastizität gegen die Innenseite des Aufweitkopfes, so dass ein Reibschluss entsteht, der eine Drehmomentübertragung ermöglicht. Der Einsatz von O-Ringen bietet den Vorteil, dass sie sich leicht auswechseln lassen und sehr preiswerte Verschleißmittel darstellen.

Ebenfalls als Mitnahmemittel einsetzbar ist ein am Aufweitkopf oder an der Kegelspitze gehaltener Magnet. Der Einsatz von Magneten bietet den Vorteil, dass diese als nicht-mechanische Mitnahmemittel praktisch keinem Verschleiß unterliegen.

Weiterhin kann eine formschlüssige Verbindung zwischen der Kegelspitze und dem Aufweitkopf vorgesehen sein. Hierzu ist an dem einen der beiden Bauteile eine sich in der Richtung der Längsachse des Grundkörpers erstreckende Nut und an dem anderen der beiden Bauteile ein damit in Eingriff stehendes Mitnahmeelement, beispielsweise in der Form eines Mitnahmestifts ausgebildet, vorgesehen. Durch den Eingriff von Nut und Mitnahmeelement wird eine Drehmomentübertragung ermöglicht, und aufgrund der Ausbildung der Nut als Längsnut bleibt dieser Eingriff auch bestehen, wenn die Kegelspitze axial gegenüber dem Aufweitkopf verstellt wird.

Schließlich ist ebenso möglich, eine beliebige Kombination der erfindungsgemäßen Mitnahmeelemente vorzusehen. Zusätzlich können auch in an sich bekannter Weise ein in einer Aufnahme des Kegels bewegbar gehaltenes und elastisch in Richtung des Aufweitkopfes beaufschlagtes Druckstück vorgesehen sein.

In weiterer Ausgestaltung der Erfindung ist vorgesehen, dass der Kegel axial unterteilt ist, wobei ein erstes Teilelement die Kegelspitze trägt und ein zweites Teilelement mit dem Stellelement koppelbar ist, und wobei die beiden Teilelemente axialfest miteinander gekoppelt und um die Längsachse relativ zueinander drehbar gelagert sind.

Mit anderen Worten ist der Kegel axial unterteilt in ein erstes Teilelement, welches mit dem Aufweitkopf in Verbindung steht und mit einem Drehmoment beaufschlagt wird, und ein zweites Teilelement, welches mit dem Stellelement des Pressgeräts gekoppelt ist. Da die beiden Teilelemente des Kegels relativ zueinander drehbar sind, wird das auf das erste Teilelement wirkende Drehmoment nicht auf das zweite Teilelement und damit auch nicht auf das Stellelement des Pressgeräts übertragen.

Eine Möglichkeit der drehbaren Lagerung besteht darin, die beiden Teilelemente des Kegels durch ein Gleit- oder Wälzlager zu verbinden. Diese können auch axiale Zugkräfte übertragen. Die zugfeste Kopplung der beiden Teilelemente stellt dabei sicher, dass sich diese bei axialer Verschiebung eines Teilelements zusammen bewegen.

In an sich bekannter Weise weist die erfindungsgemäße Vorrichtung einen in radialer Richtung aufweitbaren Aufweitkopf auf, der an dem Grundkörper oder dem Gehäuse des Pressgerätes drehbar fixiert und der eine kegelige Aufnahme besitzt, in welche die Kegelspitze eingreift.

Eine weitere Ausführungsform der erfindungsgemäßen Vorrichtung kann vorsehen, dass der Kegel und der Aufweitkopf durch Mitnahmemittel in der Weise gekoppelt sind, dass der Aufweitkopf bei einer Drehung des Kegels um die Längsachse mitgedreht wird. Durch diese Mitnahmemittel wird erreicht, dass bei einer Drehung des Kegels der Aufweitkopf synchron mitgedreht wird und nicht über die Kegeloberfläche rutscht.

Die Vorrichtung kann weiterhin in bekannter Weise so ausgestaltet sein, dass der Kegel an dem Grundkörper bzw. dem Gehäuse des Pressgerätes durch einen Freilauf mit einem am Kegel kraftschlüssig gehaltenen Innenring und einer gegenüber diesem drehbar und axial verschiebbar an der Innenseite des Grundkörpers bzw. des Gehäuses anliegenden Außenring abgestützt ist, wobei der Freilauf eine Drehung des Innenrings gegenüber der äußeren Hülse nur in einer Richtung erlaubt, hingegen in der entgegen gesetzten Richtung eine Drehbarkeit blockiert. Der Freilauf ist insbesondere so ausgebildet, dass er bei der Rückwärtsbewegung des Kegels blockiert. Die Anordnung des Freilaufs im Inneren des Grundkörpers bietet dabei den Vorteil, dass hierdurch der Freilauf weitestgehend vor Verschmutzungen geschützt ist.

Die Drehung des Kegels kann durch einen in der Vorrichtung vorgesehenen Mechanismus bewirkt werden. Dazu kann der Außenring in dem Grundkörper bzw. dem Gehäuse derart zwangsgeführt sein, dass eine Axialbewegung des Außenrings auch zu einer Drehbewegung von dieser führt. Eine solche Zwangsführung kann über eine in dem Außenring des Freilaufs verlaufende schräge Führungsnut und einen in diese Führungsnut eingreifenden Stift realisiert werden, welcher im Grundkörper bzw. im Gehäuse gehalten ist.

Wird bei dieser Ausführungsform der Kegel axial bewegt, so wird der Freilauf axial mitbewegt. Die geradlinige Bewegung wird aufgrund der Zwangsführung in eine Drehbewegung des Außenrings umgesetzt. Der Kegel wird dabei nicht mitgedreht, da der Innenring des Freilaufs gegenüber dem Außenring bei der Vorwärtsbewegung drehbar ist. Wenn der Kegel zurückbewegt wird, blockiert der Freilauf mit der Folge, dass die über die Zwangsführung bewirkte Drehung des Außenrings auch eine Drehung des Kegels und damit auch des mit diesem verbundenen Aufweitkopfes mit sich bringt.

In weiterer Ausgestaltung der Erfindung verläuft die Führungsnut an ihrem zum Pressgerät weisenden Endbereich in der Längsrichtung der Vorrichtung und an ihrem zur Kegelspitze weisenden Endbereich schräg zu der Längsrichtung. Durch diese Art der Zwangsführung wird gewährleistet, dass der Aufweitkopf beim Zurückziehen des Stellelements zunächst ohne Drehung aus dem Rohr herausgezogen wird. Erst beim Erreichen des schräg verlaufenden Teils der Führungsnut wird der Aufweitkopf definiert um den durch die schräge Nut vorgegebenen Betrag gegenüber dem Grundkörper gedreht. Im Ergebnis wird der Aufweitkopf erst dann gedreht, wenn dieser keinen Kontakt mehr zur Rohrinnenseite des aufzuweitenden Rohres hat und damit frei drehbar ist.

Durch die oben beschriebene Zwangsführung ist es möglich, den Winkel der definierten Rotation auf die Breite der Aufweitsegmente abzustimmen. Soll die Rohraufweitung in lediglich 2 Schritten vollzogen werden, ist es vorteilhaft, wenn die Zwangsführung eine definierte Rotation von etwa der halben Breite eines Aufweitsegments bewirkt. In diesem Fall liegt die Einpressvertiefung durch ein Aufweitsegment im ersten Aufweitungsschritt beim zweiten Aufweitvorgang genau zwischen zwei Aufweitsegmenten. Möglicherweise im ersten Aufweitungsschritt entstandene Inhomogenitäten an der Rohrinnenseite werden durch den zweiten, gedrehten Aufweitschritt weitestgehend beseitigt.

Die definierte Rotation kann auch ein Drittel, ein Viertel oder ein Fünftel der Breite eines Aufweitsegments betragen. Dabei kann die Zwangsführung so auf die Breite der Aufweitsegmente abgestimmt werden, dass, wenn die Rohraufweitung in X-Schritten vorgenommen wird, die Rotation 1/X-tel der Breite eines Aufweitsegments beträgt, wobei X eine ganze Zahl zwischen 2 und 20 ist. Eine Rohraufweitung mit mehr als 20 Schritten ist ebenfalls möglich, beispielsweise, wenn das Rohrmaterial sehr empfindlich gegen zu hohe Dehnungen in einem Schritt ist.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt
- Figur 1: eine Vorrichtung zum Aufweiten von Rohren gemäß der vorliegenden Erfindung in Vorderansicht,
- Figur 2: die Vorrichtung aus Figur 1 im Schnitt entlang der Linie A-A,
- Figur 3: die Vorrichtung aus Figur 1 im Betätigungszustand,
- Figur 4: die Vorrichtung aus Figur 1 mit abgenommenem Grundkörper und Aufweitkopf in perspektivischer Ansicht,
- Figur 5: eine weitere Ausführungsform einer erfindungsgemäßen Vorrichtung zum Aufweiten von Rohren im Längsschnitt,
- Figur 6: den Kegel der Vorrichtung aus Figur 5 in perspektivischer Ansicht,
- Figur 7: eine dritte Ausführungsform einer erfindungsgemäßen Vorrichtung zum Aufweiten von Rohren im Längsschnitt,
- Figur 8: die Vorrichtung aus Figur 5 in perspektivischer Ansicht mit abgenommenem Aufweitkopf,
- Figur 9: den Aufweitkopf der Vorrichtung aus Figur 5 von unten betrachtet,
- Figur 10: eine vierte Ausführungsform einer erfindungsgemäßen Vorrichtung zum Aufweiten von Rohren im Längsschnitt,
- Figur 11: die Vorrichtung aus Figur 10 in perspektivischer Ansicht mit abgenommener Überwurfmutter, und
- Figur 12: die Überwurfmutter der Vorrichtung aus Figur 10 von unten betrachtet.

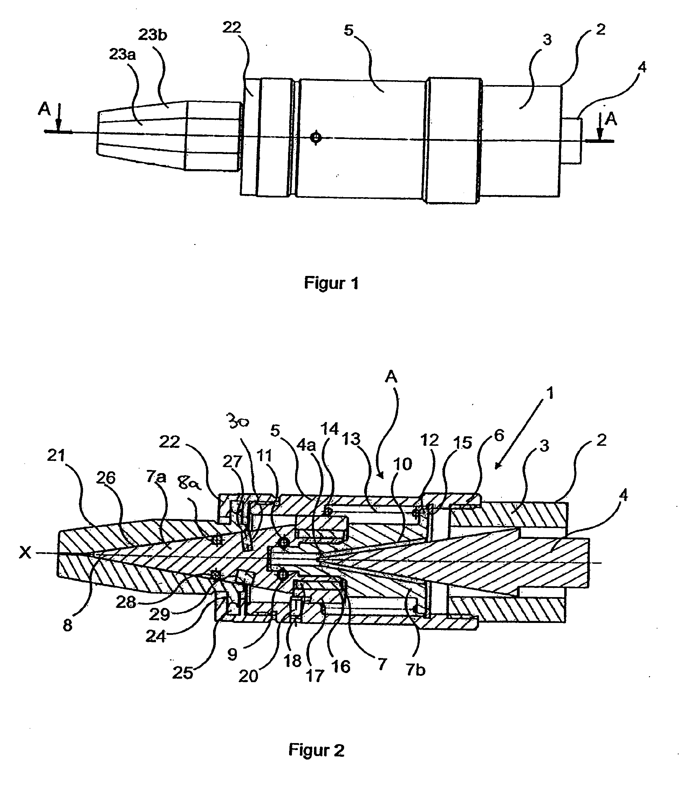

In den Figuren 1 bis 4 ist eine Vorrichtung zum Aufweiten von Rohren 1 gemäß der vorliegenden Erfindung dargestellt. Die Vorrichtung umfasst ein Pressgerät 2 mit einem Gehäuse 3, in dem ein Stellelement 4 axial verschiebbar geführt ist. Das Stellelement 4 weist an seinem aus dem Gehäuse 3 ragenden Ende eine kegelförmige Spitze 4a auf.

Die Vorrichtung umfasst des weiteren ein Adapterelement A mit einem Grundkörper 5, der auf ein Gewinde 6 des Gehäuses 2 geschraubt ist. In dem Grundkörper 5 ist ein Kegel 7 vorgesehen, der in dem Grundkörper 5 axial verschiebbar und um die Längsachse X der Vorrichtung drehbar gehalten ist. Der Kegel 7 ist an seinem einen axialen Endbereich mit dem Stellelement 4 des Pressgeräts 2 gekoppelt und weist an seinem anderen Endbereich eine Kegelspitze 8 auf.

Wie in der Figur 2 gut erkennbar ist, ist der Kegel 7 axial unterteilt und umfasst ein erstes Teilelement 7a, welches an seinem einen Ende die Kegelspitze 8 trägt und auf seiner gegenüberliegenden Seite mit einer Aufnahme 9 versehen ist, in welche das zweite Teilelement 7b eingreift. Das zweite Teilelement 7b besitzt auf seiner dem Pressgerät 2 zugewandten Seite eine kegelige Aufnahme 10, in welche die kegelförmige Spitze 4a des Stellelements 4 eingreift.

Zwischen den beiden Teilelementen 7a und 7b ist ein Wälzlager 11 verbaut, das die freie Drehbarkeit der Teilelemente 7a und 7b gegeneinander gewährleistet und diese zugfest miteinander koppelt.

Der Kegel 7 ist durch einen Freilauf 16 an dem Grundkörper 5 abgestützt. Der Freilauf 16 besitzt einen Außenring 17, der im Grundkörper 5 drehbar und axial verschiebbar gehalten ist. Der Freilauf 16 weist ferner einen Innenring 18 auf, der kraftschlüssig mit dem der Kegelspitze 8 gegenüberliegenden, zylindrisch ausgeführten Ende des ersten Teilelements 7a des Kegels 7 verbunden ist. Der Freilauf 16 ist derart ausgestaltet, dass er eine Drehung des Innenrings 18 gegenüber der äußeren Hülse 17 in einer Richtung erlaubt, hingegen in der entgegen gesetzten Richtung eine Drehbarkeit blockiert.

Der Außenring 17 des Freilaufs 16 weist ferner eine Zwangsführung auf, die den Bewegungsspielraum des Außenrings 17 in dem Grundkörper 5 bestimmt. Die Zwangsführung wird durch eine in den Außenring 17 vorgesehene Führungsnut 19 und einen in diese eingreifenden, im Grundkörper 5 gehaltenen Stift 20 gebildet. Die Führungsnut 19 verläuft an ihrem zum Pressgerät 2 weisenden Endbereich in der Längsrichtung X des Grundkörpers 5 und in ihrem zur Kegelspitze 8 weisenden Endbereich schräg zu der Längsrichtung X. Hierdurch wird erreicht, dass sich das erste Teilelement 7a beim Zurückfahren des Kegels 7 zunächst gerade zurückbewegt und erst bei Erreichen des schräg verlaufenden Bereichs der Führungsnut 19 eine Drehbewegung ausführt.

An dem Grundkörper 5 ist ein Aufweitkopf 21 mittels einer Überwurfmutter 22 drehbar befestigt. Der Aufweitkopf 21 besteht, wie in der Figur 1 gut zu erkennen ist, aus einzelnen Aufweitsegmenten 23a, 23b, die zusammengesetzt einen nahezu kreisrunden Querschnitt ergeben. Die einzelnen Segmente 23a, 23b weisen an ihrer Außenseite jeweils einen Vorsprung 24 auf, der in eine Ringnut 25 der Überwurfmutter 22 eingreift und darin radial verschiebbar gehalten ist.

Die Aufweitsegmente 23a, 23b bilden eine zentrale, kegelförmige Aufnahme 26, in welche die Kegelspitze 8 eingreift. Die Kegelspitze 8 und der Aufweitkopf 21 sind miteinander in der Weise gekoppelt, dass eine Drehung des ersten Teilelements 7a des Kegels 7 auch zu einer Drehung des Aufweitkopfes 21 führt. Hierzu sind an der Kegelspitze 8 entsprechende Mitnahmemittel vorgesehen. Diese umfassen ein in einer Aufnahme 30 der Kegelspitze 8 gehaltenes und federnd in Richtung des Aufweitkopfes 21 vorgespanntes Druckstück 27. Weiterhin ist ein in einer Ringnut 8a gehaltener O-Ring 28 vorgesehen, der mit der Innenseite der Aufweitsegmente 23a, 23b in Kontakt steht, wobei eine Drehmomentübertragung vom Kegel 7 auf den Aufweitkopf durch einen Reibschluss zwischen dem O-Ring 28 und den Aufweitsegmenten 23a, 23b ermöglicht wird.

Schließlich ist ein Magnet 29 an der Kegelspitze 8 vorgesehen, welcher eine Drehmomentübertragung an dem Aufweitkopf 21 möglich macht. Es kann durchaus ausreichend sein, nur eines der dargestellten Mitnahmemittel vorzusehen.

Im Betrieb wird der Aufweitkopf 21 der erfindungsgemäßen Vorrichtung 1 in ein aufzuweitendes Rohr eingeführt. Anschließend wird das Pressgerät 2 betätigt, wodurch das Stellelement 4 aus der in Figur 2 dargestellten Ausgangslage in die in Figur 2 dargestellte Stellung ausgefahren wird. Durch die Axialbewegung des Stellelements 4 wird der Kegel 7 entgegen der Rückstellkraft der Druckfeder 13 in Richtung des Aufweitkopfs 21 gedrückt. Dabei wird der Außenring 17 aufgrund der durch die Führungsnut 19 und den damit in Eingriff stehenden Stift 20 definierte Zwangsführung gedreht. Diese Drehbewegung überträgt sich nicht auf den Kegel 7, da sich dieser durch den Freilauf 16 gegenüber dem Außenring 17 frei drehen kann.

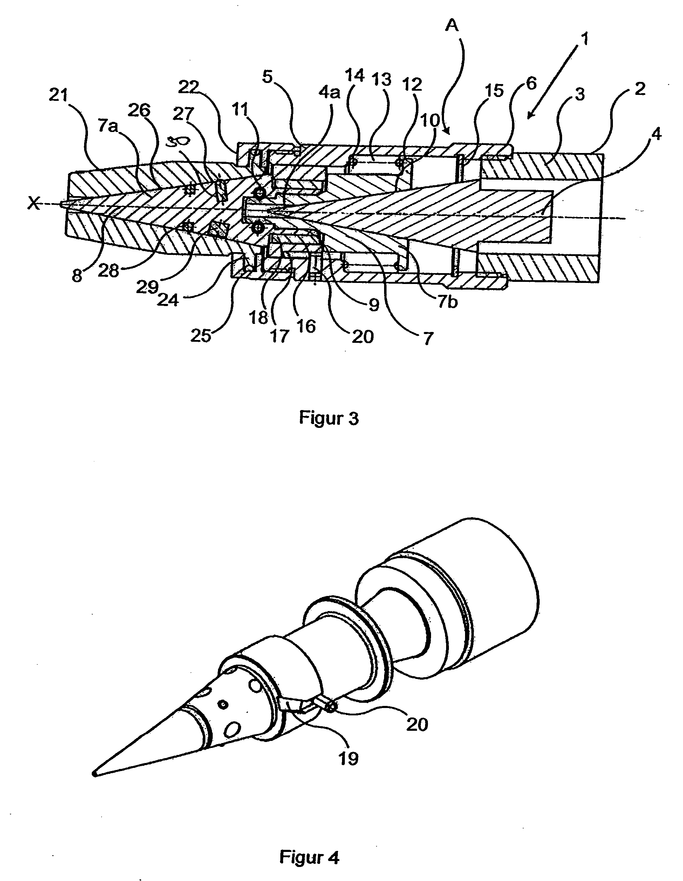

Durch die Axialbewegung des Kegels 7 werden die Aufweitsegmente 23a, 23b des Aufweitkopfes 21 auseinander gedrückt und hierdurch das Rohr aufgeweitet, bis der vordere Umkehrpunkt der Längsbewegung des Stellelements 4 erreicht ist (siehe Figur 3).

Anschließend wird das Stellelement 4 des Pressgeräts 2 zurückgezogen. Dabei wird der Kegel 7 durch die Rückstellkraft der Druckfeder 13 wieder in die in Figur 2 dargestellte Ausgangsposition zurückgeschoben, in welcher der Kegel 7 am Sicherungsring 15 anliegt. Bei dieser Bewegung vollzieht der Außenring 17 des Freilaufes 16 aufgrund der Zwangsführung eine definierte Drehung, die in entgegengesetzter Richtung verläuft wie die Drehung, die er bei der Vorwärtsbewegung ausführt. Da der Freilauf 16 in dieser Drehrichtung blockiert, dreht sich das erste Teilelement 7a des Kegels 7 und damit auch der mit der Kegelspitze 8 über die Mitnahmemittel 27, 28, 29 drehfest gekoppelte Aufweitkopf 21 mit. Diese Drehbewegung des ersten Teilelements 7a wird nicht auf das zweite Teilelement 7b und damit auch nicht auf das Stellelement 4 übertragen, da das zweite Teilelement 7b des Kegels 7 über das Wälzlager 11 von dem ersten Teilelement 7a drehentkoppelt ist.

Durch die Rückbewegung des Kegels 7 werden die Segmente 23a, 23b des Aufweitkopfes 21 wieder in ihre Ausgangsposition bewegt, wodurch der Kontakt zu der nun aufgeweiteten Rohrinnenwand aufgehoben wird.

Sobald das Stellelement 4 seine Ausgangslage erreicht, kehrt sich die Bewegungsrichtung des Stellelements 4 wieder um. Der Aufweitvorgang wird so oft wiederholt, bis das Rohr um den gewünschten Betrag aufgeweitet ist.

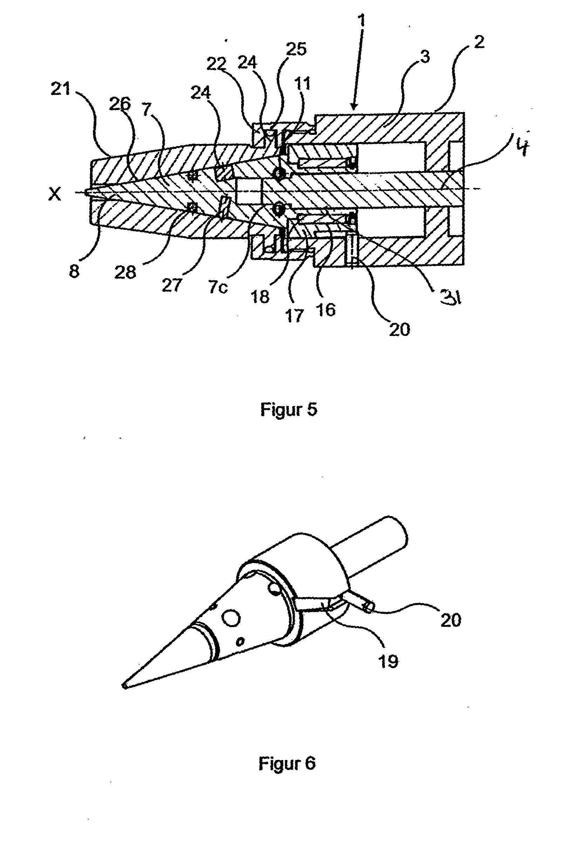

In den Figuren 5 und 6 ist eine alternative Ausführungsform einer erfindungsgemäßen Vorrichtung 1 zum Aufweiten von Rohren dargestellt. Diese Vorrichtung besitzt den gleichen Grundaufbau wie die zuvor beschriebene Ausführungsform mit der Maßgabe, dass der Kegel 7 über den Freilauf 16 unmittelbar in dem Gehäuse 3 des Pressgeräts 2 gelagert und auch der Aufweitkopf 21 über die Überwurfmutter 25 unmittelbar an dem Gehäuse 3 fixiert ist. Das Stellelement 4 des Pressgeräts 2 ist hier als eine Kolbenstange ausgebildet, welche unmittelbar in eine Aufnahme 31 des hier einteilig ausgebildeten Kegels 7 eingreift und darin über ein Wälzlager 11 axialfest und um die Längsachse X der Vorrichtung 1 drehbar gelagert ist.

Im Betrieb wird der Aufweitkopf 21 dieser Vorrichtung 1 in ein aufzuweitendes Rohr eingeschoben und das Pressgerät 2 betätigt, wodurch das Stellelement 4 vorgeschoben wird. Die Axialbewegung des Stellelements 4 führt dazu, dass der Kegel 7 in den Aufweitkopf 21 gedrückt wird und diesen aufweitet. Die Axialbewegung des Kegels 7 führt auch zu einer Axialbewegung des Freilaufs 16, dessen Außenring 17 aufgrund der durch die Führungsnut 19 und den damit in Eingriff stehenden, am Gehäuse 3 fixierten Stift 20, bewirkten Zwangsführung eine Drehung ausführt. Diese wird aufgrund der Drehbarkeit des Freilaufes 16 nicht auf den Kegel 7 übertragen, so dass dieser eine reine Axialbewegung ausführt. Beim Zurückziehen des Stellelements 4 wird der Kegel 7 aufgrund der durch das Wälzlager 11 bewirkenden axialfesten Kopplung ebenfalls zurückgezogen. Auch hier führt der Außenring 17 eine Drehbewegung in entgegengesetzter Richtung aus, die aufgrund der Blockierung des Freilaufes 16 auf den Kegel 7 übertragen wird, so dass dieser zusammen mit dem Aufweitkopf 21 ebenfalls gedreht wird. Die Drehbewegung 7 des Kegels überträgt sich nicht auf das Stellelement 4 des Pressgeräts 2, da dieses von dem Kegel 7 über das Wälzlager 11 drehentkoppelt ist.

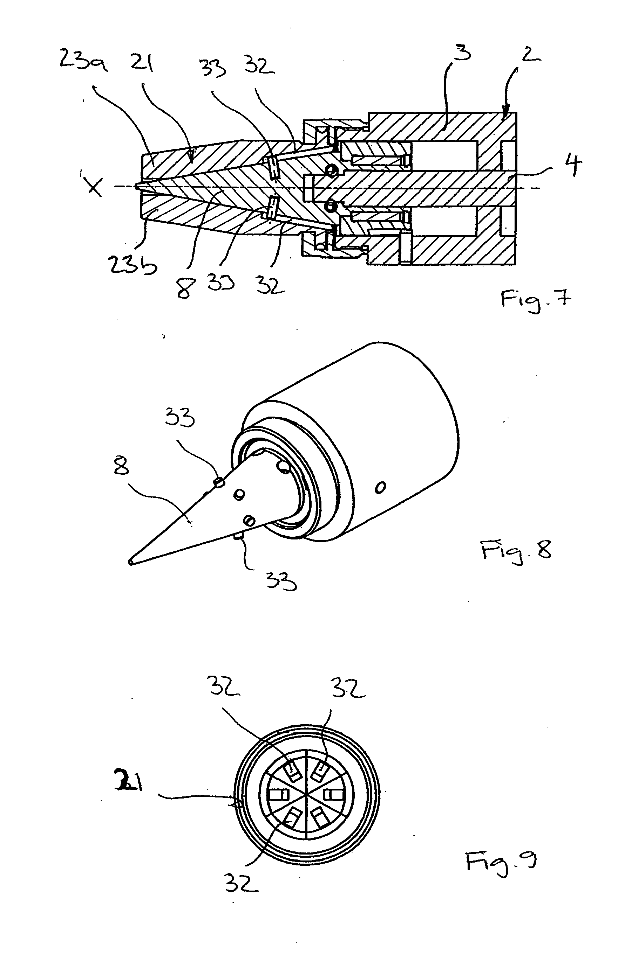

In den Figur 7 bis 9 ist eine weitere Ausführungsform einer erfindungsgemäßen Vorrichtung 1 dargestellt, die den gleichen Aufbau wie die in den Figuren 5 und 6 dargestellte Ausführungsform besitzt. Ein Unterschied besteht lediglich hinsichtlich der Mitnahmemittel 32, 33, über welche die Kegelspitze 8 mit dem Aufweitkopf 21 drehfest gekoppelt ist. Bei der vorliegenden Ausführungsform erfolgt die Drehmomentübertragung kraftschlüssig. Hierzu sind an der Innenseite der Aufweitsegmente 23a, 23b des Aufweitkopfs 21 Nuten 32 ausgebildet, die sich in der Längsrichtung der Vorrichtung 1 erstrecken, und in diese Nuten 32 greift jeweils ein Mitnahmestift 33 ein, der an der Kegelspitze 8 gehalten ist. Der Eingriff von Nut 32 und Mitnahmestift 33 ermöglicht eine Drehmomentübertragung zwischen der Kegelspitze 8 und dem Aufweitkopf 21, und aufgrund der Ausbildung der Nut 32 als Längsnut bleibt dieser Eingriff auch bestehen, wenn die Kegelspitze 8 axial gegenüber dem Aufweitkopf 21 bewegt wird.

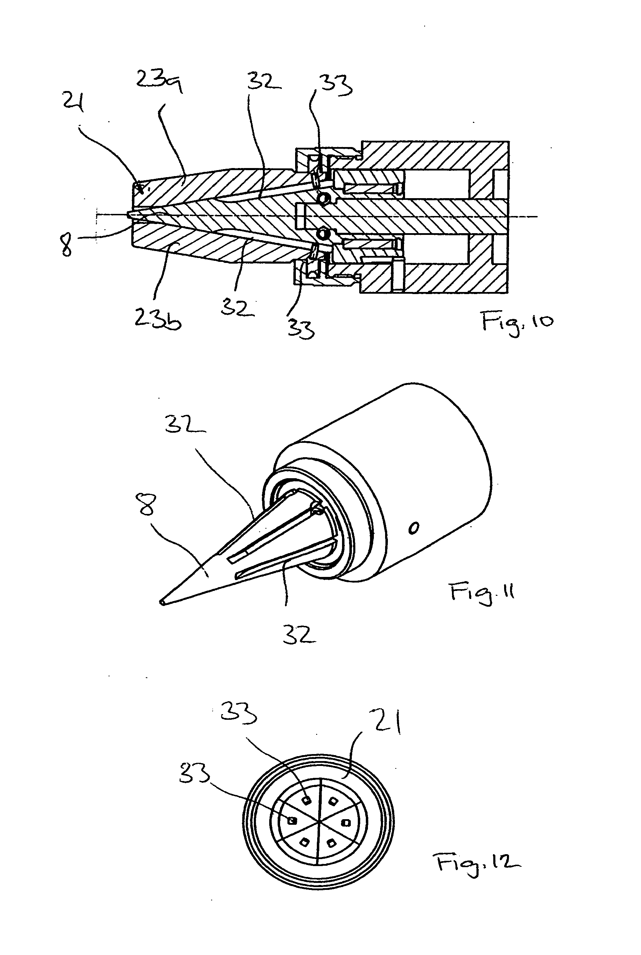

Wie in den Figuren 10 bis 12 erkennbar ist, kann die Anordnung auch umgekehrt getroffen sein. In diesem Fall sind die Längsnuten 32 an der Kegelspitze und die Mitnahmestifte 33 an den Aufweitsegmenten 23a, 23b des Aufweitkopfs 21 gehalten.

## Patentansprüche

1. Vorrichtung (1) zum Aufweiten von Rohren mit einem Kegel (7), der in dem Gehäuse (3) eines Pressgerätes (2) oder in einem an dem Gehäuse (3) des Pressgeräts (2) fixierbaren Grundkörper (5) um dessen Längsachse (X) drehbar und axial verschiebbar gehalten ist, wobei der Kegel (7) an seinem einen axialen Endbereich mit einem Stellelement (4) des Pressgeräts (2) koppelbar ist und an seinem andern Endbereich eine mit einem Aufweitkopf (21) in Eingriff bringbare Kegelspitze (8) aufweist, und mit Mitnahmemitteln, durch die der Kegel (7) und der Aufweitkopf (21) in der Weise gekoppelt sind, dass der Aufweitkopf (21) bei einer Drehung des Kegels (7) um die Längsachse (X) mitgedreht wird, **dadurch gekennzeichnet, dass** die Mitnahmemittel einen in einer Ringnut (8a) des Kegels (7) gehaltenen O-Ring (28) und/oder einen an der Kegelspitze (8) oder dem Aufweitkopf (21) gehaltenen Magnet (29) umfassen und/oder eine an der Kegelspitze (8) oder dem Aufweitkopf (21) ausgebildete, sich in der Längsachsenrichtung erstreckende Nut (31) und an dem anderen der beiden Bauteile (8, 21) ein mit der Nut (31) in Eingriff stehendes, insbesondere stiftförmig ausgebildetes Mitnahmeelement (32) umfassen.

2. Vorrichtung nach Anspruch 1, **dadurch gekennzeichnet, dass** die Mitnahmemittel zusätzlich ein in einer Aufnahme (30) des Kegels (7) bewegbar gehaltenes und elastisch in Richtung des Aufweitkopfes (21) beaufschlagtes Druckstück (27) umfassen.

3. Vorrichtung nach Anspruch 1 oder 2, **dadurch gekennzeichnet, dass** der Kegel (7) axial unterteilt ist, wobei ein erstes Teilelement (7a) die Kegelspitze (8) trägt und ein zweites Teilelement (7b) mit dem Stellelement (4) zugfest gekoppelt ist, und dass die Teilelemente (7a, 7b) relativ zueinander um die Längsachse (X) drehbar gelagert sind.

4. Vorrichtung nach Anspruch 3, **dadurch gekennzeichnet, dass** die Teilelemente (7a, 7b) durch ein Gleit- oder ein Wälzlager (11) drehbar verbunden sind.

5. Vorrichtung nach einem der vorstehenden Ansprüche, **dadurch gekennzeichnet, dass** die Vorrichtung einen in radialer Richtung aufweitbaren Aufweitkopf (21) aufweist, der an dem Gehäuse (3) bzw. dem Grundkörper (5) drehbar fixiert ist und eine kegelige Aufnahme (26) aufweist, in welche die Kegelspitze (8) eingreift.

6. Vorrichtung nach Anspruch 5, **dadurch gekennzeichnet, dass** der Aufweitkopf (21) eine Vielzahl von Aufweitsegmenten (23a, 23b) aufweist.

7. Vorrichtung nach Anspruch 6, **dadurch gekennzeichnet, dass** der Aufweitkopf (21) einen oder mehrere in den Aufweitsegmenten (23a, 23b) gehaltene Magnete (2a) aufweist.

8. Vorrichtung nach einem der vorherigen Ansprüche, **dadurch gekennzeichnet, dass** der Kegel (7) an dem Gehäuse (3) bzw. dem Grundkörper (5) durch einen Freilauf (16) mit einem am Kegel (7) kraftschlüssig gehaltenen Innenring (18) und einem gegenüber diesem drehbar und axial verschiebbar an der Innenseite des Grundkörpers (5) anliegenden Außenring (17) abgestützt ist, wobei der Freilauf (16) eine Drehung des Innenrings (18) gegenüber dem Außenring (17) nur in einer Richtung erlaubt, hingegen in der entgegengesetzten Richtung eine Drehbarkeit blokkiert.

9. Vorrichtung nach Anspruch 8, **dadurch gekennzeichnet, dass** der Außenring (17) in dem Gehäuse (3) bzw. dem Grundkörper (5) derart zwangsgeführt ist, dass eine Axialbewegung des Außenrings (17) auch zu einer Drehbewegung von dieser führt.

10. Vorrichtung nach Anspruch 8 oder 9, **dadurch gekennzeichnet, dass** in dem Außenring (17) eine Führungsnut (19) ausgebildet ist, in welche ein im Gehäuse (3) bzw. im Grundkörper (5) gehaltener Stift (20) eingreift.

11. Vorrichtung nach Anspruch 10, **dadurch gekennzeichnet, dass** die Führungsnut (19) an ihrem zum Pressgerät (2) weisenden Endbereich in der Längsrichtung (X) und an ihrem zur Kegelspitze (8) weisenden Endbereich schräg zu der Längsrichtung (X) verläuft.

12. Vorrichtung nach Anspruch 9 bis 11, **dadurch gekennzeichnet, dass** die Zwangsführung eine definierte Rotation des Aufweitkopfes (21) von 1/X-tel der Breite eines Aufweitsegments (23a) bewirkt, wenn die Rohraufweitung in X Schritten erfolgt, wobei X eine ganze Zahl zwischen 2 und 20 ist.

13. Vorrichtung nach einem der Ansprüche 9 bis 12, **dadurch gekennzeichnet, dass** die Zwangsführung eine definierte Rotation des Aufweitkopfes (21) von etwa der halben Breite eines Aufweitsegments (23a) bewirkt.
